# EUROPEAN PATENT SPECIFICATION

(11) **EP 3 144 954 B1**
(45) Date of publication and mention of the grant of the patent: **16.09.2020**
(21) Application number: 15791920.0
(22) Date of filing: 04.05.2015
(51) Int. Cl.: H01F 38/14, H01J 7/00, H01F 1/34, H01F 27/28

(54) **WIRELESS POWER TRANSMISSION DEVICE**
VORRICHTUNG ZUR DRAHTLOSEN STROMÜBERTRAGUNG
DISPOSITIF DE TRANSMISSION DE PUISSANCE SANS FIL

(30) Priority: 16.05.2014 CN 201410208565
(43) Date of publication of application: 22.03.2017
(73) Proprietor: Tyco Electronics (Shanghai) Co., Ltd., Shanghai 200233 (CN)
(72) Inventor: WANG, Shaoyong, Shanghai 200233 (CN); SONG, Yuming, Shanghai 200233 (CN); DAI, Feng, Shanghai 200233 (CN); ZOU, Li, Shanghai 200233 (CN)
(74) Representative: Grünecker Patent- und Rechtsanwälte PartG mbB
(86) International application number: PCT/CN2015/078177
(87) International publication number: WO 2015/172665

(56) References cited:
- EP-A2- 0 510 926
- CN-A- 1 819 397
- CN-A- 101 478 182
- CN-A- 101 645 617
- CN-A- 102 882 283
- CN-U- 201 887 566
- JP-A- 2009 060 762
- JP-A- 2009 284 695
- US-A1- 2014 084 699

## Description

### BACKGROUND OF THE INVENTION

### Field of the Invention

The present disclosure relates to a wireless power transmission device adapted to wirelessly transmit a power through an electromagnetic coupling.

### Description of the Related Art

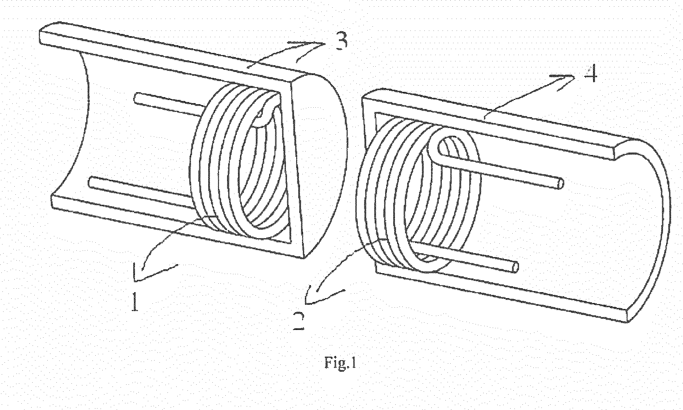

In an electronic and electrical apparatus, an electric power required by control components and drive components is obtained mainly through external wirings or built-in batteries. The electric power is mainly transmitted by means of a physical connection through power lines in the apparatus. Therefore, physical wear is prone to occur in some regions where moving parts are located, thereby resulting in some security, lifetime and maintenance issues. As a result, a wireless electrical energy transmission is introduced into the design of the electronic and electrical apparatus, i.e., a coil assembly coupling is used in some key parts so as to achieve non-contact energy transmission, as shown in Fig. 1.

Fig. 1 shows a conventional wireless power transmission device. The wireless power transmission device comprises a first spiral coil 1 (e.g., a transmitting coil) received in a first housing 3 and a second spiral coil 2 (e.g., a receiving coil) received in a second housing 4. The first spiral coil 1 and the second spiral coil 2 are separated from each other by a predetermined distance in a direction along their central axes. Ends of the two coils are parallel to each other. Spaces formed by the two coils respectively are disjoint and independent from each other. The two coils are electromagnetically coupled with each other, so that electric power is wirelessly transmitted between the first spiral coil 1 and the second spiral coil 2.

However, during an actual design process for the wireless power transmission, such a coil cooperating structure brings some difficulties for certain performances. For example, it is sometimes required that the power receiving coil mounted in the moving parts needs to maintain some electric characteristics, such as a constant voltage, current, power or the like within a certain motion range. However, it is very difficult for the separated coupling manner shown in Fig. 1 to achieve this effect. Also, since the two coils are separated and independent from each other over spatially coupling distance, a coupling strength thereof is small, and an effective coupling distance is very short, typically less than 10mm. In order to obtain stronger electromagnetic coupling and longer coupling distance, it is necessary to increase a diameter and a thickness of the coils, thereby resulting in an excessive size thereof.

EP 0 510 926 A2 discloses a rotary transformer, transmitting signals without any physical contact between its rotary part and its stationary part. In the rotary transformer, cores having different frequency characteristics are integrally combined, so that signals having a plurality of different frequency ranges can be selectively transmitted by cores having frequency characteristics optimum for such frequency ranges.

In JP 2009-60762A, a power feeder is disclosed, which includes a guideline 1 made of conductive material and connected to a high-frequency power supply. A magnetic core surrounds the guideline and is displaceable along the guideline. A coil wound around the core is electrically connected to a load on the moving body. The guideline is moulded in a block of synthetic resin, in which also a block of magnetic material is embedded.

CN 1819397 relates to a non-contact electric energy transmission device which has coil windings aligned respectively with the 3 orthogonal spatial directions.

US 2014/0084699 describes a direct drive robot, which has a rail member, a movable member guided by the rail member and movable along the rail member. Further, an electric motor to drive the movable member is enclosed. The system includes a transmission coil and a reception coil for contact-free transmission of energy to the electric motor.

### SUMMARY OF THE INVENTION

The present disclosure is intended to solve at least one aspect of the above-mentioned problems and drawbacks existed in the prior art.

In order to meet the requirements of small size, strong coupling and constant coupling within a certain motion range, the inventor of the present disclosure provides a new solution in which a transmitting coil and a receiving coil of key parts cooperate with each other by means of a special cooperation manner.

Through research, the inventor of the present disclosure has found that a strong electromagnetic coupling may be obtained if the transmitting coil and the receiving coil cooperate with each other in a nested-fit manner, so that an efficient transmission power from the transmitting coil to the receiving coil can be ensured. The nested-fit manner herein means that: at least a portion of one of the transmitting coil and the receiving coil passes through at least a portion of a space defined by the other of the transmitting coil and the receiving coil, the two nested coils are not in contact with each other, but spaces defined by the two coils respectively are at least partially overlapped with each other, and axes of the two coils may be parallel to, perpendicular to each other or intersect with each other at any other angles. Also, the nested-fit manner between the two coils can be easily extended to the nested-fit between a plurality of coils.

The present disclosure provides a wireless power transmission device having coils of small sizes, a strong electromagnetic coupling between the coils and a substantially constant strength of electromagnetic coupling between the coils within a certain motion range.

According to an aspect of the present disclosure, there is provided a wireless power transmission device comprising a first coil and a second coil electromagnetically coupled to the first coil without contacting therewith, wherein at least a portion of one of the first coil and the second coil passes through at least a portion of a space defined by the other of the first coil and the second coil. The wireless power transmission device further comprises a first magnetic core disposed inside or outside the first coil and forming a first coil assembly together with the first coil and a second magnetic core disposed inside or outside the second coil and forming a second coil assembly together with the second coil, wherein the second coil assembly passes through the first coil assembly via the space without contacting therewith. The first coil comprises a first portion and a second portion opposite to the first portion and the space is a space defined between the first portion and the second portion of the first coil. The first magnetic core comprises a U-shaped body portion, a first block connected to a side of the U-shaped body portion at an opening thereof, and a second block connected to the other side of the U-shaped body portion at the opening thereof. The first portion of the first coil is wound around the first block of the first magnetic core, and the second portion of the first coil is wound around the second block of the first magnetic core.

According to an embodiment of the present disclosure, the first coil defines a space through which a central axis of the first coil passes, and the second coil passes through the first coil via the space.

According to another embodiment of the present disclosure, the central axis of the first coil is parallel to a central axis of the second coil.

According to further another embodiment of the present disclosure, the central axis of the first coil is perpendicular to a central axis of the second coil.

According to yet another embodiment of the present disclosure, the central axis of the first coil is angled with a central axis of the second coil.

According to further another embodiment of the present disclosure, the space is an annular space surrounded by the first coil.

According to yet another embodiment of the present disclosure, the central axis of the first coil is coincident with that of the second coil.

According to still another embodiment of the present disclosure, the first magnetic core is arranged to surround an outer periphery of the first coil, and the second coil is arranged to surround an outer periphery of the second magnetic core.

According to further another embodiment of the present disclosure, the first coil is rotatable around its central axis, and the second coil is movable in a direction along its central axis.

The first coil and the second coil can be spiral coil windings, first and second spiral coil windings formed on the first magnetic and second cores respectively, for example.

Furthermore, the first magnetic core and the second magnetic core can be made of a soft magnetic material such as a ferrite or plasto-ferrite material.

According to further another embodiment of the present disclosure, the first magnetic core and the second magnetic core are made of Mn-Zn oxide ferrite material or

Ni-Zn oxide ferrite material. The present disclosure, however, is not limited to use the two ferrite magnetic cores, and other suitable ferrite magnetic cores may also be used.

According to yet another embodiment of the present disclosure, the first coil and the first magnetic core are formed as a hollow cylindrical shape, and the second coil is formed as a hollow cylindrical shape, and the second magnetic core is formed as a solid cylindrical shape.

Both the first and second magnetic cores can be made of a plasto-ferrite material.

According to further another embodiment of the present disclosure, the first coil and the first magnetic core are formed as a hollow cylindrical, prismatic or pyramidal shape, the second coil is formed as a hollow cylindrical, prismatic or pyramidal shape, and the second magnetic core is formed as a solid cylindrical, prismatic or pyramidal shape. The first and second coils and the first and second magnetic cores, however, are not limited to the above shapes, and other suitable shapes may also be used.

According to yet another embodiment of the present disclosure, the wireless power transmission device comprises a plurality of first coil assemblies and a second coil assembly. The second coil assembly passes through the plurality of first coil assemblies via the space without contacting with each first coil assembly.

According to still another embodiment of the present disclosure, the second magnetic core has an elongated rectangular parallelepiped shape, and the second coil is wound around an outer periphery of the second magnetic core.

The first magnetic core and the second magnetic core can be made of a soft magnetic material such as a ferrite or plasto-ferrite material.

According to yet another embodiment of the present disclosure, the first and second magnetic cores are made ofMn-Zn oxide ferrite material or Ni-Zn oxide ferrite material.

According to another embodiment of the present disclosure, each of the first magnetic core and the second magnetic core has a circular, oval, triangular, trapezoidal, rectangular or square cross section.

According to yet another embodiment of the present disclosure, the wireless power transmission device comprises a plurality of first coil assemblies and a second coil assembly. The second coil assembly passes through the plurality of first coil assemblies via the space without contacting with each first coil assembly.

In the wireless power transmission device according to various embodiments of the present disclosure, since one of a transmitting coil and a receiving coil passes through the other of the transmitting coil and the receiving coil, strength of electromagnetic coupling between the two coils can be improved so as to increase the strength of electromagnetic coupling between the coils without increasing sizes thereof.

Other objectives and advantages of the present disclosure will become more apparent by describing the present disclosure with reference to the following accompanying drawings, and this description may also aid to give a complete comprehension of the present disclosure.

### BRIEF DESCRIPTION OF THE DRAWINGS

Fig. 1 shows a schematic view of an electromagnetic coupling device in the prior art;
Fig.2 shows a schematic view of a wireless power transmission device according to a first not claimed example;
Fig.3 shows a schematic view of a wireless power transmission device according to a second not claimed example;
Fig.4 shows a schematic view of a wireless power transmission device according to a first embodiment of the present disclosure;
Fig.5 shows a schematic view of a wireless power transmission device according to a second embodiment of the present disclosure.

### DETAILED DESCRIPTION OF PREFERRED EMBODIMENTS OF THE IVENTION

The technical solutions of the disclosure will be described hereinafter in detail in exemplary embodiments with reference to the attached drawings. In the description, the same or similar reference numerals refer to the same or similar components. The description to the embodiments of the disclosure hereinafter with reference to the attached drawings is intended to explain the general inventive idea of the invention and should not be construed as being limitative to the disclosure.

In addition, in the below detail description, for easy to explain, many specific details are set forth to provide a complete understanding to the disclosure. However, one or more embodiments can be obviously carried out without these specific details. In other cases, well-known structures and devices are illustrated to simplify the drawings.

According to a general inventive concept, there is provided a wireless power transmission device comprising a first coil 11 and a second coil 21 electromagnetically coupled to the first coil without contacting therewith, wherein at least a portion of one of the first coil 11 and the second coil 12 passes through at least a portion of a space defined by the other of the first coil 11 and the second coil 12.

### [First Example]

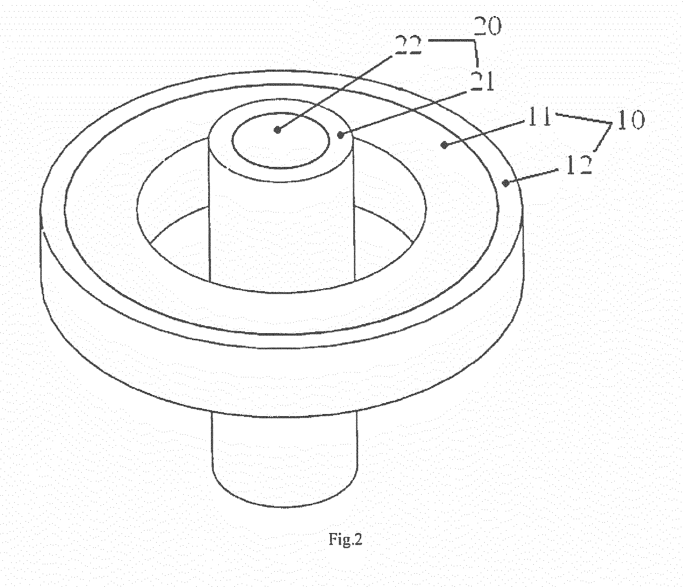

Fig.2 shows a schematic view of a wireless power transmission device according to a first example.

As shown in Fig.2, the wireless power transmission device mainly comprises a first coil 11 and a second coil 21 electromagnetically coupled with the first coil 11 without contacting therewith. One of the first coil 11 and the second coil 21 is a transmitting coil, and the other is a receiving coil.

With continued reference to Fig.2, the first coil 11 is a spiral coil defining a hollow annular space internally. A central axis of the first coil 11 passes through the annular space, and the second coil 21 passes through the first coil 11 via the annular space.

In the example illustrated in Fig.2, a central axis of the second coil 21 is coincident with that of the first coil 11. That is, the second coil 21 has the same central axis as the first coil 11. Alternatively, the central axis of the first coil 11 may not be coincident with or parallel to that of the second coil 21. For example, the central axis of the first coil 11 may be perpendicular to or angled with that of the second coil 21. For example, an angle between the central axes of the first and second coils 11 and 12 may be greater than 0 degree and less than 90 degrees. Preferably, the angle may be greater than 0 degree and less than 30 degrees, and more preferably, the angle may be greater than 0 degree and less than 15 degrees. More preferably, the angle may be greater than 0 degree and less than 10 degrees, and more preferably, the angle may be greater than 0 degree and less than 5 degrees.

In order to improve an electromagnetic coupling between the first coil 11 and the second coil 21, as shown in Fig.2, a first magnetic core 12 is provided outside the first coil 11. That is, the first magnetic core 12 is arranged to surround an outer circumferential surface of the first coil 11. The first coil 11 and the first magnetic core 12 together form a first coil assembly 10.

As shown in Fig.2, a second magnetic core 22 is provided inside the second coil 21. That is, the second coil 21 is arranged to surround an outer circumferential surface of the second magnetic core 22, in other words, the second coil 21 is wound around the second magnetic core 22. The second coil 21 and the second magnetic core 22 together form a second coil assembly 20.

As shown in Fig.2, the second coil assembly 20 passes through the first coil assembly 10 via the annular space defined by the first coil 11 without contacting therewith.

In the embodiment shown in Fig.2, the first coil 11 is rotatable around its central axis, and the second coil 21 is movable in a direction along its central axis.

As shown in Fig.2, the first coil 11 and the second coil 21 may be spiral coil windings, for example, spiral coil windings formed on the first and second coils on the first and second magnetic cores respectively.

The first magnetic core 12 and the second magnetic core 22 may be made of a soft magnetic material such as ferrite material or plasto-ferrite material.

In an embodiment of the present disclosure, since a strength of coupling between the transmitting coil and the receiving coil is essential for efficient power transmission, in order to generate sufficient electromagnetic coupling between coils of small size, in an embodiment of the present disclosure, the first magnetic core 12 and the second magnetic core 22 may be made of a conventional ferrite material such as Mn-Zn oxide ferrite material or Ni-Zn oxide ferrite material.

However, the Mn-Zn oxide ferrite material and the Ni-Zn oxide ferrite material have disadvantages that they cannot be injection molded into a complex shape and have a large weight. In order to overcome these disadvantages of the Mn-Zn oxide ferrite material and the Ni-Zn oxide ferrite material, a new type of plasto-ferrite material having a low initial permeability (typically 5-20), light weight, and can be easily injection molded into a variety of complex shapes has appeared in recent years. Thus, the first magnetic core 12 and the second magnetic core 22 may be made of plasto-ferrite material. The plasto-ferrite material herein includes any ferrite material having plasticity that is commercially available through a legitimate commercial route.

As shown in Fig.2, the first coil 11 and the first magnetic core 12 are formed as a hollow cylindrical shape, the second coil 21 is formed as a hollow cylindrical shape, and the second magnetic core 22 is formed as a solid cylindrical shape.

However, the present disclosure is not limited to such shapes. Alternatively, the first coil 11 and the first magnetic core 12 may be formed as a hollow prismatic shape, pyramidal shape or other suitable shapes. Further, the second coil 21 may be formed as a hollow prismatic shape, pyramidal shape or other suitable shapes, and the second magnetic core 22 may be formed as a solid prismatic shape, pyramidal shape or other suitable shapes.

### [Second Example]

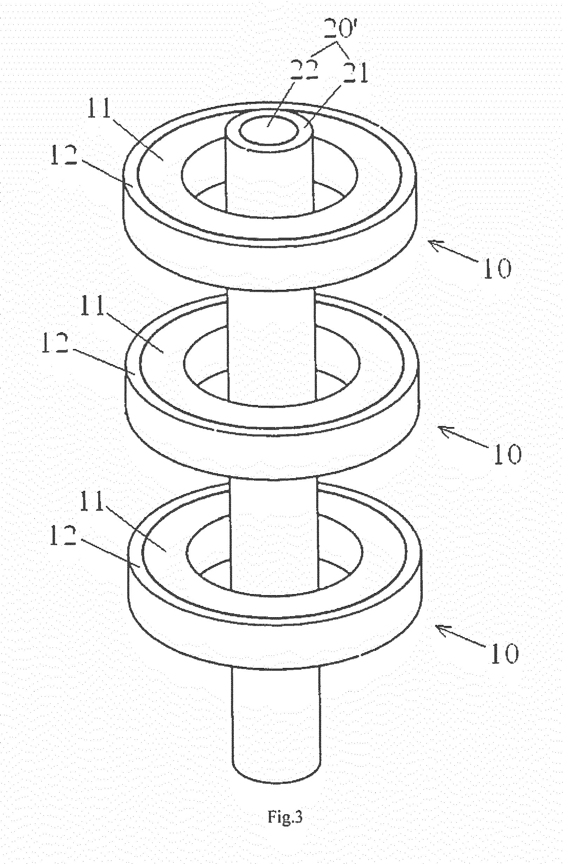

Fig.3 shows a schematic view of a wireless power transmission device according to a second examplee.

The wireless power transmission device according to the second example shown in Fig.3 differs from that according to the first example shown in Fig.2 in that: the wireless power transmission device according to the first example shown in Fig.2 comprises only one first coil assembly 10, while the wireless power transmission device according to the second example shown in Fig.3 comprises a plurality of first coil assemblies 10.

As shown in Fig.3, the wireless power transmission device comprises a plurality of first coil assemblies 10 and a second coil assembly 20. The second coil assembly 20 passes through the plurality of first coil assemblies 10 via an annular space defined by each of the first coils 11 of the plurality of first coil assemblies 10 respectively without contacting with each first coil assembly 10.

It should be noted that, in the example shown in Fig.3, the second coil assembly 20 has a long length along its central axis so as to pass through the plurality of first coil assemblies 10.

In the example shown in Fig.3, central axes of a plurality of first coils 11 is coincident with a central axis of the second coil 21. That is, the plurality of first coils 11 have the same central axis as the second coil 21.

### [First Embodiment]

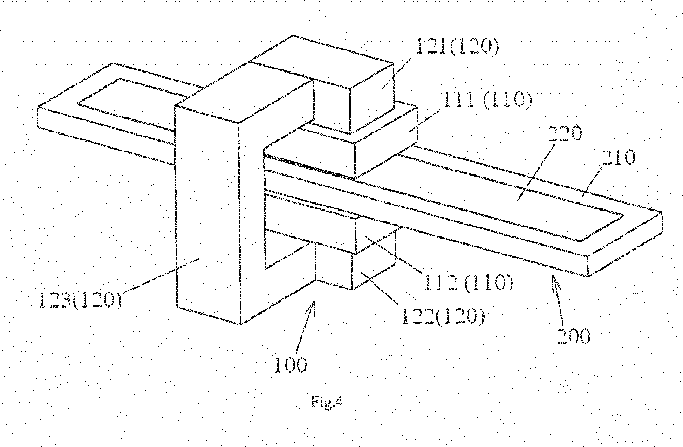

Fig.4 shows a schematic view of a wireless power transmission device according to a first embodiment of the present disclosure.

As shown in Fig.4, the wireless power transmission device mainly comprises a first coil 110 and a second coil 210 electromagnetically coupled to the first coil 110 without contacting therewith. One of the first coil 110 and the second coil 210 is a transmitting coil, and the other is a receiving coil.

With Continued reference to Fig.4, the first coil 110 includes a first portion 111 and a second portion 112 opposite to the first portion 111. The first portion 111 and the second portion 112 of the first coil 110 are spaced apart from each other. However, it should be noted that the first portion 111 and the second portion 112 of the first coil 110 are formed by winding the same wire.

As shown in Fig.4, a space is defined between the first portion 111 and the second portion 112 of the first coil 110. A central axis of the first coil 110 passes through the space, and the second coil 210 passes between the first portion 111 and the second portion 112 of the first coil 110 via the space.

In the embodiment shown in Fig.4, a central axis of the second coil 210 is parallel to that of the first coil 110. However, it is not necessary that the central axis of the second coil 210 is coincident with that of the first coil 110. It should be noted that the present disclosure is not limited to the illustrated embodiment. Alternatively, the central axis of the first coil 110 may be perpendicular to or angled with that of the second coil 210. For example, an angle formed between the central axes of the first and second coils 110 and 210 may be greater than 0 degree and less than 90 degrees. In an exemplary embodiment of the present invention, the angle may be greater than 0 degree and less than 30 degrees. In an exemplary embodiment of the present invention, the angle may be greater than 0 degree and less than 15 degrees. In an exemplary embodiment of the present invention, the angle may be greater than 0 degree and less than 10 degrees. In an exemplary embodiment of the present invention, the angle may be greater than 0 degree and less than 5 degrees.

In order to improve an electromagnetic coupling between the first coil 110 and the second coil 210, as shown in Fig.4, the first coil 110 is provided with a first magnetic core 120, and the second coil 210 is provided with a second magnetic core 220.

As shown in Fig.4, in the illustrated embodiment, the first magnetic core 120 comprises a U-shaped body portion 123, a first block 121 connected to a side (upper side in Fig.4) of the U-shaped body portion 123 at an opening thereof, and a second block 122 connected to the other side (lower side in Fig.4) of the U-shaped body portion 123 at the opening thereof. The first portion 111 of the first coil 110 is wound around the first block 121 of the first magnetic core 120, and the second portion 112 of the first coil 110 is wound around the second block 122 of the first magnetic core 120. In this way, the first coil 110 and the first magnetic core 120 together form a first coil assembly 100.

With Continued reference to Fig.4, the second magnetic core 220 has an elongated rectangular parallelepiped shape, and the second coil 210 is wound around an outer periphery of the second magnetic core 220. In this way, the second coil 210 and the second magnetic core 220 together form a second coil assembly 200.

As shown in Fig.4, the second coil assembly 200 passes through the first coil assembly 100 via the space between the first portion 111 and the second portion 112 of the first coil 110 without contacting therewith.

The first magnetic core 120 and the second magnetic core 220 may be made of a soft magnetic material such as a ferrite or plasto-ferrite material.

In an embodiment of the present disclosure, since a strength of coupling between the transmitting coil and the receiving coil is essential for efficient power transmission, in order to generate sufficient electromagnetic coupling between coils of small size, in an embodiment of the present disclosure, the first magnetic core 120 and the second magnetic core 220 may be made of a conventional ferrite material such as Mn-Zn oxide ferrite material or Ni-Zn oxide ferrite material.

However, the Mn-Zn oxide ferrite material and the Ni-Zn oxide ferrite material have disadvantages that they cannot be injection molded into a complex shape and have a large weight. In order to overcome these disadvantages of the Mn-Zn oxide ferrite material and the Ni-Zn oxide ferrite material, a new type of plasto-ferrite material having a low initial permeability (typically 5-20), light weight, and can be easily injection molded into a variety of complex shapes has appeared in recent years. Thus, in another embodiment of the present disclosure, the first magnetic core 120 and the second magnetic core 220 may be made of plasto-ferrite material. The plasto-ferrite material herein includes any ferrite material having plasticity that is commercially available through a legitimate commercial route.

In the embodiment shown in Fig.4, the first magnetic core 120 and the second magnetic core 220 have substantially rectangular cross sections. However, the present disclosure is not limited to the illustrated embodiment. In another embodiment of the present disclosure, the cross section of each of the first magnetic core 120 and the second magnetic core 220 may have a circular, oval, triangular, trapezoidal, square shape or other suitable shapes.

### [Second Embodiment]

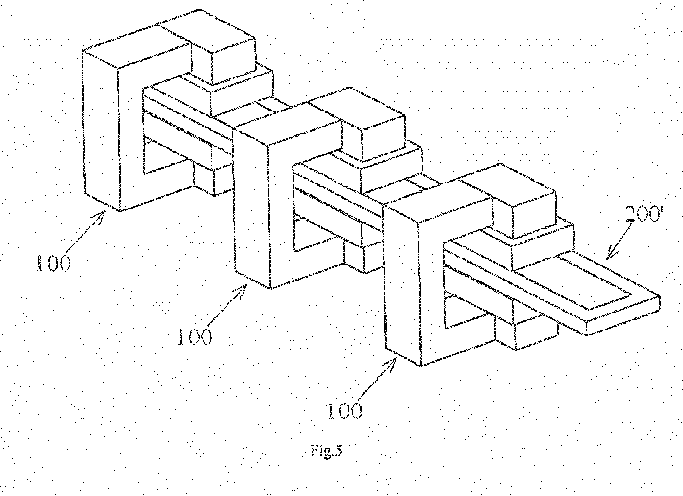

Fig.5 shows a schematic view of a wireless power transmission device according to a second embodiment of the present disclosure.

The wireless power transmission device according to the second embodiment shown in Fig.5 differs from that according to the first embodiment shown in Fig.4 in that: the wireless power transmission device according to the first embodiment shown in Fig.4 comprises only one first coil assembly 100, while the wireless power transmission device according to the second embodiment shown in Fig. 5 comprises a plurality of first coil assemblies 100.

As shown in Fig.5, the wireless power transmission device comprises a plurality of first coil assemblies 100 and a second coil assembly 200. The second coil assembly 200 passes through the plurality of first coil assemblies 100 via a space defined by the first portion 111 and the second portion 112 of each of the first coils 110 of the plurality of first coil assemblies 100 respectively without contacting with each first coil assembly 100.

It should be noted that, in the embodiment shown in Fig.5, the second coil assembly 200 has a long length in a direction perpendicular to its central axis so as to pass through the plurality of first coil assemblies 100.

In the embodiment shown in Fig.5, the central axes of the plurality of first coils 110 are positioned in the same plane as that of the second coil 210.

It should be appreciated for those skilled in the art that all the above embodiments are illustrative. Also, many modifications may be made to the above embodiments by those skilled in the art, and various structures described in various embodiments may be freely combined with each other without conflicting in configuration or principle.

Though the present invention is described with reference to the accompanying drawings, the disclosed embodiments with reference to the drawings intend to make an exemplary illustration to the implementations of the present invention as defined in the claims.

## Claims

1. A wireless power transmission device comprising:
a first coil (110); and
a second coil (210) electromagnetically coupled with the first coil without contacting therewith,
wherein at least a portion of one of the first coil and the second coil passes through at least a portion of a space defined by the other of the first coil and the second coil;
the wireless power transmission device further comprising:
a first magnetic core (120) disposed inside or outside the first coil and forming a first coil assembly (100) together with the first coil; and
a second magnetic core (220) disposed inside or outside the second coil and forming a second coil assembly (200) together with the second coil,
wherein the second coil assembly (200) passes through the first coil assembly via the space without contacting therewith; and
wherein the first coil (110) comprises a first portion (111) and a second portion (112) opposite to the first portion (111); and the space is a space defined between the first portion (111) and the second portion (112) of the first coil (110); and
wherein the first magnetic core (120) comprises:
a U-shaped body portion (123);
a first block (121) connected to a side of the U-shaped body portion (123) at an opening thereof; and
a second block (122) connected to the other side of the U-shaped body portion (123) at the opening thereof; and
wherein
the first portion (111) of the first coil (110) is wound around the first block (121) of the first magnetic core (120), and
the second portion (112) of the first coil (110) is wound around the second block (122) of the first magnetic core (120).

2. The wireless power transmission device according to claim 1, wherein
the first coil defines a space through which a central axis of the first coil passes; and
the second coil passes through the first coil via the space.

3. The wireless power transmission device according to claim 2, wherein
the central axis of the first coil is parallel to a central axis of the second coil.

4. The wireless power transmission device according to claim 2, wherein
the central axis of the first coil is perpendicular to a central axis of the second coil.

5. The wireless power transmission device according to claim 2, wherein
the central axis of the first coil is angled with a central axis of the second coil.

6. The wireless power transmission device according to claim 1, wherein the space is an annular space surrounded by the first coil.

7. The wireless power transmission device according to claim 6, wherein the central axis of the first coil is coincident with a central axis of the second coil.

8. The wireless power transmission device according to claim 7, wherein
the first magnetic core is arranged to surround an outer periphery of the first coil; and
the second coil is arranged to surround an outer periphery of the second magnetic core.

9. The wireless power transmission device according to claim 8, wherein
the first coil is rotatable around its central axis, and the second coil is movable in a direction along its central axis.

10. The wireless power transmission device according to claim 1, wherein
the first magnetic core and the second magnetic core are made of Mn-Zn oxide ferrite material or Ni-Zn oxide ferrite material.

11. The wireless power transmission device according to claim 10, wherein
the first coil and the first magnetic core are formed as a hollow cylindrical, prismatic or pyramidal shape; and
the second coil is formed as a hollow cylindrical, prismatic or pyramidal shape, and the second magnetic core is formed as a solid cylindrical, prismatic or pyramidal shape.

12. The wireless power transmission device according to any one of claims 1 to 11, wherein
the wireless power transmission device comprises a plurality of first coil assemblies (100) and a second coil assembly (200); and
the second coil assembly (200) passes through the plurality of first coil assemblies via the space without contacting with each first coil assembly.

13. The wireless power transmission device according to claim 1, wherein
the second magnetic core (220) has an elongated rectangular parallelepiped shape, and
the second coil (210) is wound around an outer periphery of the second magnetic core (220).

## Patentansprüche

1. Vorrichtung für drahtlose Energieübertragung, die umfasst:
eine erste Spule (110); und
eine zweite Spule (210), die elektromagnetisch mit der ersten Spule gekoppelt ist, ohne mit ihr in Kontakt zu sein
wobei wenigstens ein Abschnitt der ersten Spule oder der zweiten Spule durch wenigstens einen Teil eines Raums verläuft, der durch die andere von der ersten Spule und der zweiten Spule gebildet wird;
wobei die Vorrichtung für drahtlose Energieübertragung des Weiteren umfasst:
einen ersten Magnetkern (120), der innerhalb oder außerhalb der ersten Spule angeordnet ist und zusammen mit der ersten Spule eine erste Spulenanordnung (100) bildet; sowie
einen zweiten Magnetkern (220), der innerhalb oder außerhalb der zweiten Spule angeordnet ist und zusammen mit der zweiten Spule eine zweite Spulenanordnung (200) bildet;
wobei die zweite Spulenanordnung (200) über den Raum durch die erste Spulenanordnung hindurchtritt, ohne mit ihr in Kontakt zu kommen;
die erste Spule (110) einen ersten Abschnitt (111) und einen dem ersten Abschnitt (111) gegenüberliegenden zweiten Abschnitt (112) umfasst; und der Raum ein zwischen dem ersten Abschnitt (111) und dem zweiten Abschnitt (112) der ersten Spule (110) ausgebildeter Raum ist; und
der erste Magnetkern (120) umfasst:
einen U-förmigen Körper-Abschnitt (123);
einen ersten Block (121), der mit einer Seite des U-förmigen Körper-Abschnitts (123) an einer Öffnung desselben verbunden ist; sowie
einen zweiten Block (122), der mit der anderen Seite des U-förmigen Körper-Abschnitts (123) an der Öffnung desselben verbunden ist; und
wobei
der erste Abschnitt (111) der ersten Spule (110) um den ersten Block (121) des ersten Magnetkerns (120) herum gewickelt ist, und
der zweite Abschnitt (112) der ersten Spule (110) um den zweiten Block (122) des ersten Magnetkerns (120) herum gewickelt ist.

2. Vorrichtung für drahtlose Energieübertragung nach Anspruch 1, wobei
die erste Spule einen Raum bildet, durch den eine Mittelachse der ersten Spule hindurch verläuft;
und
die zweite Spule über den Raum durch die erste Spule hindurchtritt.

3. Vorrichtung für drahtlose Energieübertragung nach Anspruch 2, wobei die Mittelachse der ersten Spule parallel zu einer Mittelachse der zweiten Spule ist.

4. Vorrichtung für drahtlose Energieübertragung nach Anspruch 2, wobei die Mittelachse der ersten Spule senkrecht zu einer Mittelachse der zweiten Spule ist.

5. Vorrichtung für drahtlose Energieübertragung nach Anspruch 2, wobei die Mittelachse der ersten Spule zu einer Mittelachse der zweiten Spule abgewinkelt ist.

6. Vorrichtung für drahtlose Energieübertragung nach Anspruch 1, wobei der Raum ein ringförmiger Raum ist, der von der ersten Spule umgeben ist.

7. Vorrichtung für drahtlose Energieübertragung nach Anspruch 6, wobei die Mittelachse der ersten Spule mit einer Mittelachse der zweiten Spule zusammenfällt.

8. Vorrichtung für drahtlose Energieübertragung nach Anspruch 7, wobei
der erste Magnetkern so angeordnet ist, dass er einen Außenumfang der ersten Spule umgibt; und
die zweite Spule so angeordnet ist, dass sie einen Außenumfang des zweiten Magnetkerns umgibt.

9. Vorrichtung für drahtlose Energieübertragung nach Anspruch 8, wobei die erste Spule um ihre Mittelachse herum gedreht werden kann, und die zweite Spule in einer Richtung entlang ihrer Mittelachse bewegt werden kann.

10. Vorrichtung für drahtlose Energieübertragung nach Anspruch 1, wobei der erste Magnetkern und der zweite Magnetkern aus Mn-Zn-Oxid-Ferritmaterial oder Ni-Zn-Oxid-Ferritmaterial bestehen.

11. Vorrichtung für drahtlose Energieübertragung nach Anspruch 10, wobei
die erste Spule und der erste Magnetkern in Form eines Hohlzylinders, eines Prismas oder einer Pyramide ausgebildet sind; und
die zweite Spule in Form eines Hohlzylinders, eines Prismas oder einer Pyramide ausgebildet ist, und der zweite Magnetkern in Form eines Vollzylinders, eines Prismas oder einer Pyramide ausgebildet ist.

12. Vorrichtung für drahtlose Energieübertragung nach einem der Ansprüche 1 bis 11, wobei
die Vorrichtung für drahtlose Energieübertragung eine Vielzahl erster Spulenanordnungen (100) sowie eine zweite Spulenanordnung (200) umfasst; und
die zweite Spulenanordnung (200) über den Raum durch die Vielzahl erster Spulenanordnungen hindurchtritt, ohne mit den jeweiligen ersten Spulenanordnungen in Kontakt zu kommen.

13. Vorrichtung für drahtlose Energieübertragung nach Anspruch 1, wobei
der zweite Magnetkern (220) die Form eines länglichen Quaders hat und die zweite Spule (210) um einen Außenumfang des zweiten Magnetkerns (220) herum gewickelt ist.

## Revendications

1. Dispositif de transmission d'énergie sans fil comprenant :
une première bobine (110); et
une seconde bobine (210) couplée électromagnétiquement à la première bobine sans entrer en contact avec celle-ci,
dans lequel au moins une partie de l'une parmi la première bobine et la seconde bobine passe à travers au moins une partie d'un espace défini par l'autre parmi la première bobine et la seconde bobine ;
le dispositif de transmission d'énergie sans fil comprenant en outre :
un premier noyau magnétique (120) disposé à l'intérieur ou à l'extérieur de la première bobine et formant un premier ensemble de bobine (100) conjointement avec la première bobine ; et
un second noyau magnétique (220) disposé à l'intérieur ou à l'extérieur de la seconde bobine et formant un second ensemble de bobine (200) conjointement avec la seconde bobine,
dans lequel le second ensemble de bobine (200) passe à travers le premier ensemble de bobine via l'espace sans entrer en contact avec celui-ci ; et
dans lequel la première bobine (110) comprend une première partie (111) et une seconde partie (112) opposée à la première partie (111) ; et l'espace est un espace défini entre la première partie (111) et la seconde partie (112) de la première bobine (110) ; et
dans lequel le premier noyau magnétique (120) comprend :
une partie de corps en forme de U (123) ;
un premier bloc (121) connecté à un côté de la partie de corps en forme de U (123) au niveau d'une ouverture de celle-ci ; et
un second bloc (122) connecté à l'autre côté de la partie de corps en forme de U (123) au niveau de l'ouverture de celle-ci ; et
dans lequel
la première partie (111) de la première bobine (110) est enroulée autour du premier bloc (121) du premier noyau magnétique (120), et
la seconde partie (112) de la première bobine (110) est enroulée autour du second bloc (122) du premier noyau magnétique (120).

2. Dispositif de transmission d'énergie sans fil selon la revendication 1, dans lequel la première bobine définit un espace à travers lequel passe un axe central de la première bobine ; et
la seconde bobine traverse la première bobine via l'espace.

3. Dispositif de transmission d'énergie sans fil selon la revendication 2, dans lequel l'axe central de la première bobine est parallèle à un axe central de la seconde bobine.

4. Dispositif de transmission d'énergie sans fil selon la revendication 2, dans lequel l'axe central de la première bobine est perpendiculaire à un axe central de la seconde bobine.

5. Dispositif de transmission d'énergie sans fil selon la revendication 2, dans lequel l'axe central de la première bobine est incliné par rapport à un axe central de la seconde bobine.

6. Dispositif de transmission d'énergie sans fil selon la revendication 1, dans lequel l'espace est un espace annulaire entouré par la première bobine.

7. Dispositif de transmission d'énergie sans fil selon la revendication 6, dans lequel l'axe central de la première bobine coïncide avec un axe central de la seconde bobine.

8. Dispositif de transmission d'énergie sans fil selon la revendication 7, dans lequel le premier noyau magnétique est agencé pour entourer une périphérie extérieure de la première bobine ; et
la seconde bobine est agencée pour entourer une périphérie extérieure du second noyau magnétique.

9. Dispositif de transmission d'énergie sans fil selon la revendication 8, dans lequel la première bobine peut tourner autour de son axe central, et la seconde bobine est mobile dans une direction le long de son axe central.

10. Dispositif de transmission d'énergie sans fil selon la revendication 1, dans lequel le premier noyau magnétique et le second noyau magnétique sont constitués d'un matériau de ferrite d'oxyde de Mn-Zn ou d'un matériau de ferrite d'oxyde de Ni-Zn.

11. Dispositif de transmission d'énergie sans fil selon la revendication 10, dans lequel la première bobine et le premier noyau magnétique sont formés en une forme cylindrique, prismatique ou pyramidale creuse ; et
la seconde bobine est formée en une forme cylindrique, prismatique ou pyramidale creuse, et le second noyau magnétique est formé en une forme cylindrique, prismatique ou pyramidale pleine.

12. Dispositif de transmission d'énergie sans fil selon l'une quelconque des revendications 1 à 11, dans lequel
le dispositif de transmission d'énergie sans fil comprend une pluralité de premiers ensembles de bobine (100) et un second ensemble de bobine (200) ; et
le second ensemble de bobine (200) passe à travers la pluralité de premiers ensembles de bobine via l'espace sans entrer en contact avec chaque premier ensemble de bobine.

13. Dispositif de transmission d'énergie sans fil selon la revendication 1, dans lequel le second noyau magnétique (220) a une forme parallélépipédique rectangulaire allongée, et
la seconde bobine (210) est enroulée autour d'une périphérie extérieure du second noyau magnétique (220).
